(19) Europäisches Patentamt
European Patent Office
Office européen des brevets

(11) **EP 4 421 397 A1**

(12) **EUROPEAN PATENT APPLICATION**
published in accordance with Art. 153(4) EPC

(43) Date of publication:
**28.08.2024 Bulletin 2024/35**

(21) Application number: **22898366.4**

(22) Date of filing: **02.11.2022**

(51) International Patent Classification (IPC):
**F24F 11/46** (2018.01)   **B23Q 11/14** (2006.01)
**F24F 11/64** (2018.01)   **G05B 23/02** (2006.01)

(52) Cooperative Patent Classification (CPC):
**B23Q 11/14; F24F 11/46; F24F 11/64;
G05B 19/418; G05B 23/02**

(86) International application number:
**PCT/JP2022/041003**

(87) International publication number:
**WO 2023/095582 (01.06.2023 Gazette 2023/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.11.2021  JP 2021190998**

(71) Applicants:
• **Kyoto University
Kyoto-shi, Kyoto 606-8501 (JP)**

• **DMG Mori Co., Ltd.
Yamatokoriyama-shi, Nara 639-1160 (JP)**

(72) Inventors:
• **MORI, Kotaro
Kyoto-shi, Kyoto 606-8501 (JP)**
• **YAMAJI, Iwao
Kyoto-shi, Kyoto 606-8501 (JP)**
• **OGURA, Daisuke
Kyoto-shi, Kyoto 606-8501 (JP)**

(74) Representative: **Isarpatent
Patent- und Rechtsanwälte
Barth Hassa Peckmann & Partner mbB
Friedrichstraße 31
80801 München (DE)**

(54)   **CONTROLLER, CONTROL METHOD, AND CONTROL PROGRAM**

(57)   A factory is equipped with a manufacturing apparatus (300) installed therein for manufacturing a workpiece whose manufacturing quality changes depending on a temperature inside the factory and a humidity inside the factory. A controller (100) includes a storage apparatus (120) for storing power consumption information (124) indicating a correlation between a target temperature inside the factory, a target humidity inside the factory, and a power consumption of an air conditioning apparatus (200); a setting accepting unit (154) for accepting a setting of an allowable range for a combination of a target temperature and a target humidity indicated by the power consumption information (124); a specifying unit (156) for specifying, from the power consumption information (124), a combination of a target temperature and a target humidity that minimize the power consumption within the allowable range as setting values for the air conditioning apparatus (200); and an air conditioning control unit (158) for controlling the air conditioning apparatus (200) based on the specified setting values.

FIG.4

**Description**

Technical Field

The present disclosure relates to a controller, a control method, and a control program.

Background Art

JP 2020-144470A (Patent Document 1) discloses a management apparatus that "makes it possible to establish a machine environment at a high-quality processing level without significantly reducing processing efficiency at a manufacturing site". The management apparatus limits the operation of the air conditioning apparatus so as to reduce environmental fluctuations when the machine tool performs high-quality machining.

Citation List

Patent Document

Patent Document 1: JP 2020-144470A

Summary of Invention

Technical Problem

The management apparatus shown in Patent Document 1 aims to limit the operation of an air conditioning apparatus so as to reduce changes in environmental fluctuations, and to maintain the manufacturing quality of workpieces. On the other hand, Patent Document 1 does not disclose anything regarding reducing the power consumption of the air conditioning apparatus. Therefore, there is a need for a technology that can reduce the power consumption of the air conditioning apparatus while suppressing the degradation of the manufacturing quality of workpieces.

Solution to Problem

In one example of the present disclosure, a controller for controlling an air conditioning apparatus installed in a factory is provided. The factory is equipped with a manufacturing apparatus installed therein for manufacturing a workpiece whose manufacturing quality changes depending on a temperature inside the factory and a humidity inside the factory. The controller includes: a storage apparatus for storing power consumption information indicating a correlation between a target temperature inside the factory, a target humidity inside the factory, and a power consumption of the air conditioning apparatus; a setting accepting unit for accepting a setting of an allowable range for a combination of a target temperature and a target humidity indicated by the power consumption information; a specifying unit for specifying, from the power consumption information, a combination of a target temperature and a target humidity that minimize the power consumption within the allowable range as setting values for the air conditioning apparatus; and an air conditioning control unit for controlling the air conditioning apparatus based on the setting values specified by the specifying unit.

In one example of the present disclosure, the storage apparatus stores a plurality of pieces of power consumption information. Each of the plurality of pieces of power consumption information is associated with a period in advance. The specifying unit acquires a piece of power consumption information corresponding to a current period from among the plurality of pieces of power consumption information and specifies the setting values from the acquired piece of power consumption information.

In one example of the present disclosure, the manufacturing apparatus includes at least one of a machine tool and a semiconductor manufacturing apparatus.

In one example of the present disclosure, the controller further includes a correction unit for correcting, based on the setting values, at least one of a parameter related to manufacturing the workpiece with the manufacturing apparatus; and a machining program related to manufacturing the workpiece with the manufacturing apparatus.

In one example of the present disclosure, the controller further includes a generation unit for generating the power consumption information based on a predetermined data set. The data set includes, for each point in time in the past, the temperature outside the factory at the point in time, the humidity outside the factory at the point in time, an operating state of the manufacturing apparatus at the point in time, the temperature inside the factory at the point in time, the humidity inside the factory at the point in time, and load information regarding the air conditioning apparatus at the point in time, in association with each other. The temperature inside the factory at the point in time includes at least one of a set temperature of the air conditioning apparatus and an actual temperature measured inside the factory.

The humidity inside the factory at the point in time includes at least one of a set humidity for the air conditioning apparatus and an actual humidity measured inside the factory. The load information regarding the air conditioning apparatus at the point in time includes at least one of the power consumption of the air conditioning apparatus and a heat load on the air conditioning apparatus.

In another example of the present disclosure, a control method for controlling an air conditioning apparatus installed in a factory is provided. The factory is equipped with a manufacturing apparatus installed therein for manufacturing a workpiece whose manufacturing quality changes depending on a temperature inside the factory and a humidity inside the factory. The control method includes: a step of acquiring power consumption information indicating a correlation between a target temperature inside the factory, a target humidity inside the factory, and a power consumption of the air conditioning apparatus; a step of accepting a setting of an allowable range for a combination of a target temperature and a target humidity indicated by the power consumption information; a step of specifying, from the power consumption information, a combination of a target temperature and a target humidity that minimize the power consumption within the allowable range as setting values for the air conditioning apparatus; and a step of controlling the air conditioning apparatus based on the setting values specified in the step of specifying.

In another example of the present disclosure, a control program to be executed by a computer for controlling an air conditioning apparatus installed in a factory is provided. The factory is equipped with a manufacturing apparatus installed therein for manufacturing a workpiece whose manufacturing quality changes depending on a temperature inside the factory and a humidity inside the factory. The control program enables the computer to carry out: a step of acquiring power consumption information indicating a correlation between a target temperature inside the factory, a target humidity inside the factory, and a power consumption of the air conditioning apparatus; a step of accepting a setting of an allowable range for a combination of a target temperature and a target humidity indicated by the power consumption information; a step of specifying, from the power consumption information, a combination of a target temperature and a target humidity that minimize the power consumption within the allowable range as setting values for the air conditioning apparatus; and a step of controlling the air conditioning apparatus based on the setting values specified in the step of specifying.

These and other obj ects, features, aspects, and advantages of the present invention will become apparent from the following detailed description of the invention, taken in conjunction with the accompanying drawings.

Brief Description of Drawings

FIG. 1 is a diagram showing an example of an apparatus configuration of an air conditioning control system.
FIG. 2 is a diagram showing examples of fluctuation factors for a factory environment.
FIG. 3 is a diagram showing how a target temperature of an air conditioning apparatus is changed.
FIG. 4 is a diagram showing an example of power consumption information.
FIG. 5 is a schematic diagram showing an example of a hardware configuration of a controller.
FIG. 6 is a schematic diagram showing an example of a hardware configuration of the air conditioning apparatus.
FIG. 7 is a schematic diagram showing an example of a hardware configuration of a machine tool.
FIG. 8 is a diagram showing an example of a functional configuration of the controller.
FIG. 9 is a diagram showing an example of a learning data set.
FIG. 10 is a diagram schematically showing a process of learning processing performed by a learning unit.
FIG. 11 is a diagram schematically showing a process of processing performed by an estimation unit.
FIG. 12 is a diagram showing power consumption information during May.
FIG. 13 is a diagram showing power consumption information during May.
FIG. 14 is a diagram showing power consumption information during August.
FIG. 15 is a diagram showing power consumption information during August.
FIG. 16 is a diagram showing an example of a comfort chart.
FIG. 17 is a diagram showing an example of a flowchart related to allowable range setting processing.
FIG. 18 is a diagram showing an example of a flowchart related to setting value changing processing for the air conditioning apparatus.
FIG. 19 is a diagram showing a model generated for evaluation.
FIG. 20 is a diagram showing a test environment.
FIG. 21 is a diagram showing evaluation results.
FIG. 22 is a diagram showing test conditions for a cutting test.
FIG. 23 is a diagram showing the measurement results of an outer periphery of a workpiece at 20°C and the measurement results of the outer periphery of the workpiece at 25°C.
FIG. 24 is a diagram showing an amount of thermal displacement in each test.
FIG. 25 is a diagram showing how an operating time of a manufacturing apparatus is rescheduled.

FIG. 26 is a diagram showing how the operating time of the manufacturing apparatus is rescheduled.
FIG. 27 is a diagram showing simulation results.

Description of Embodiments

Hereinafter, embodiments according to the present invention will be described with reference to the drawings. In the following description, the same components and constituent elements are given the same reference numerals. Their names and functions are also the same. Therefore, detailed descriptions thereof will not be repeated. Note that the embodiments and modification described below may be selectively combined as appropriate.

<A. Air Conditioning Control System 10>

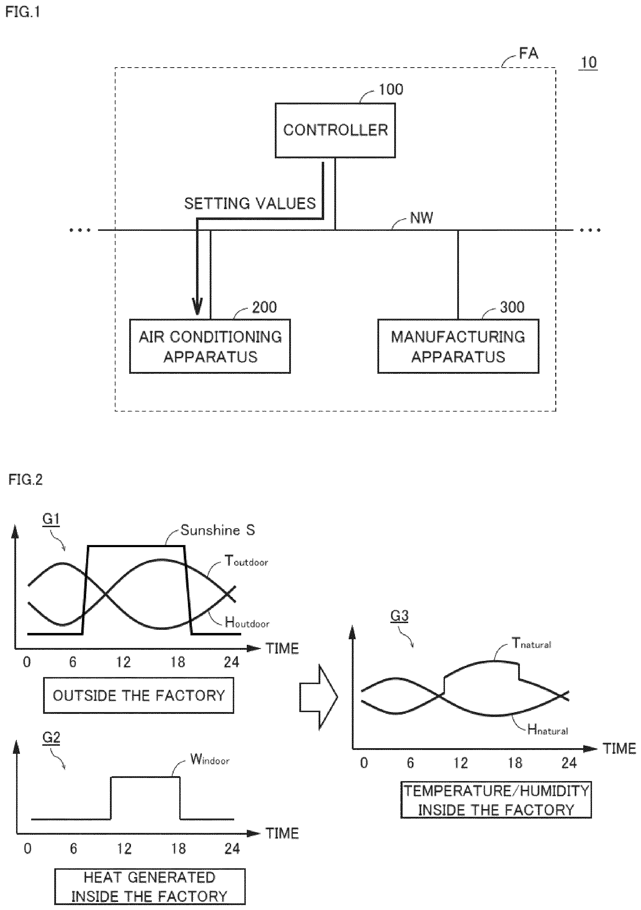

First, an apparatus configuration of an air conditioning control system 10 will be described with reference to FIG. 1. FIG. 1 is a diagram showing an example of the apparatus configuration of the air conditioning control system 10.

As shown in FIG. 1, the air conditioning control system 10 includes a controller 100, an air conditioning apparatus 200, and a manufacturing apparatus 300.

The controller 100, the air conditioning apparatus 200, and the manufacturing apparatus 300 are installed in a factory FA, for example, and are configured to be able to communicate with each other via a network NW. For example, EtherNet (registered trademark) is adopted for the network NW.

The controller 100 is an apparatus for controlling various facilities in the factory FA. In one example, the controller 100 controls the air conditioning apparatus 200 and the manufacturing apparatus 300. The controller 100 is, for example, a desktop PC (Personal Computer), a laptop PC, a tablet terminal, or another computer with a communication function.

The air conditioning apparatus 200 is an apparatus for adjusting the temperature inside the factory FA and the humidity inside the factory FA. The air conditioning apparatus 200 is, for example, an air conditioner. The air conditioning apparatus 200 may be remotely controlled by the controller 100. In one example, the controller 100 controls the air conditioning apparatus 200 by transmitting setting values thereto via the network NW. The setting values include, for example, a target temperature and a target humidity. Upon receiving the setting values from the controller 100, the air conditioning apparatus 200 changes the current set temperature to the instructed target temperature and changes the current set humidity to the instructed target humidity.

The manufacturing apparatus 300 is an apparatus for manufacturing a workpiece whose manufacturing quality changes depending on the temperature inside the factory FA and the humidity inside the factory FA. Examples of such a workpiece include a product containing iron, a product containing copper, a product containing aluminum, a product containing magnesium, and a product containing another metal.

In one example, the manufacturing apparatus 300 includes at least one of a machine tool and a semiconductor manufacturing apparatus. Examples of machine tools include a horizontal machining center, a vertical machining center, a lathe, an additive processing machine, a cutting machine, a grinding machine, and a multi-functional machine that combines these machines. Examples of semiconductor manufacturing apparatuses include a mask manufacturing apparatus, a wafer manufacturing apparatus, a semiconductor assembly apparatus, a semiconductor inspection apparatus, and a multi-functional machine that combines these apparatuses.

Although FIG. 1 shows an example in which the air conditioning control system 10 includes one controller 100, the number of controllers 100 included in the air conditioning control system 10 may be two or more.

Although FIG. 1 shows an example in which the controller 100 is installed inside the factory FA, the controller 100 may be installed outside the factory FA.

Although FIG. 1 shows an example in which the air conditioning control system 10 includes one air conditioning apparatus 200, the number of air conditioning apparatuses 200 included in the air conditioning control system 10 may be two or more.

Although FIG. 1 shows an example in which the air conditioning control system 10 includes one manufacturing apparatus 300, the number of manufacturing apparatuses 300 included in the air conditioning control system 10 may be two or more.

<B. Fluctuation Factors for Factory Environment>

Next, factors that cause fluctuations of the factory environment will be described with reference to FIG. 2. FIG. 2 is a diagram showing examples of fluctuation factors for the factory environment.

A graph G1 shown in FIG. 2 represents an example of changes in the environment outside the factory during summer. The graph G1 shows changes in an amount $S$ of solar radiation, changes in a temperature $T_{outdoor}$ outside the factory, and changes in a humidity $H_{outdoor}$ outside the factory in time series. In the example in FIG. 2, the amount $S$ of solar radiation in the time period from 6:00 to 18:00 is smaller than the amount $S$ of solar radiation in other time periods.

The temperature $T_{outdoor}$ outside the factory increases in the time period from 5:00 to 17:00 and decreases in other time periods. The humidity $H_{outdoor}$ outside the factory decreases in the time period from 5:00 to 17:00 and increases in other time periods.

A graph G2 shown in FIG. 2 represents changes in an amount $W_{indoor}$ of heat generated inside the factory in time series. In one example, the amount $W_{indoor}$ of heat generated depends on the operating state of the manufacturing apparatus 300. When the manufacturing apparatus 300 operates from 5:00 to 18:00, the amount $W_{indoor}$ of heat generated inside the factory in the period from 5:00 to 18:00 is greater than the amount $W_{indoor}$ of heat generated in other time periods.

A graph G3 shown in FIG. 2 represents an example of changes in the factory environment when the air conditioning apparatus 200 is not used. As shown in graph G3, the factory environment is affected not only by the environment outside the factory such as the temperature $T_{outdoor}$ outside the factory, the humidity $H_{outdoor}$ outside the factory, and the amount S of solar radiation, but also by the amount $W_{indoor}$ of heat generated inside the factory.

In the example shown in FIG. 2, a temperature $T_{natural}$ inside the factory is not only linked to changes in the temperature $T_{outdoor}$ outside the factory, but also linked to changes in the amount $W_{indoor}$ of heat generated inside the factory. A humidity $H_{natural}$ inside the factory is linked to changes in the humidity $H_{outdoor}$ outside the factory.

The air conditioning control system 10 controls the air conditioning apparatus 200 to maintain a constant factory environment in order to maintain constant manufacturing quality of workpieces manufactured by the manufacturing apparatus 300. Hereinafter, the amount of heat required to maintain a constant temperature and humidity inside the factory will be referred to as a heat load. A daily heat load $Q_{cooling}$[J] is calculated based on the following Formula (1).

$$Q_{cooling} = V \cdot \int (U_{natural}(t) - U_{target}(t)) dt \ ... \ (1)$$

"$U_{natural}(t)$" in the above Formula (1) represents enthalpy in a natural environment. "$U_{target}(t)$" represents enthalpy in a target environment. The target environment is an environment under the target temperature and the target humidity. The unit for "$U_{natural}(t)$" and "$U_{target}(t)$" is represented in "J/kgDA". "kgDA" in this unit represents a dry air mass. "V" represents the volume inside the factory. The unit for "V" is, for example, represented in "kgDA".

Enthalpy U [J/kg] is calculated based on the temperature T and an absolute temperature X [kg/kgDA], as shown in the following Formula (2).

$$U = c_{air}T + (C_{vapor}T + \Delta h) \cdot X \quad ... \ (2)$$

"$c_{air}$" in the above Formula (2) represents the specific heat of dry air. The value of "$c_{air}$" is, for example, 1.006 [kJ/K]. "$C_{vapor}$" represents the specific heat of steam. The value of "$C_{vapor}$" is, for example, 1.805 [kJ/kgK]. "$\Delta h$" represents the enthalpy of vaporization. The value of "$\Delta h$" is, for example, 2501 [kJ/kg].

The daily average heat load $W_{average}$ and the daily maximum heat load $W_{maximum}$ are calculated from $Q_{cooling}$ shown in Formula (1). In order to reduce the power consumption of the air conditioning apparatus 200, it is necessary to lower the average heat load $W_{average}$. On the other hand, in order to reduce power costs that are based on the cost of maintaining the electrical circuit and the contracted power capacity, it is necessary to lower the maximum heat load $W_{maximum}$.

The heat load is determined according to the difference between the enthalpy under the natural environment and the enthalpy under the target environment. Therefore, in order to reduce power consumption and power costs, it is necessary to reduce the heat load. Therefore, the air conditioning control system 10 controls the air conditioning apparatus 200 to reduce the heat load $W_{cooling}$ at each point in time.

<C. Overview of Air Conditioning Control Processing>

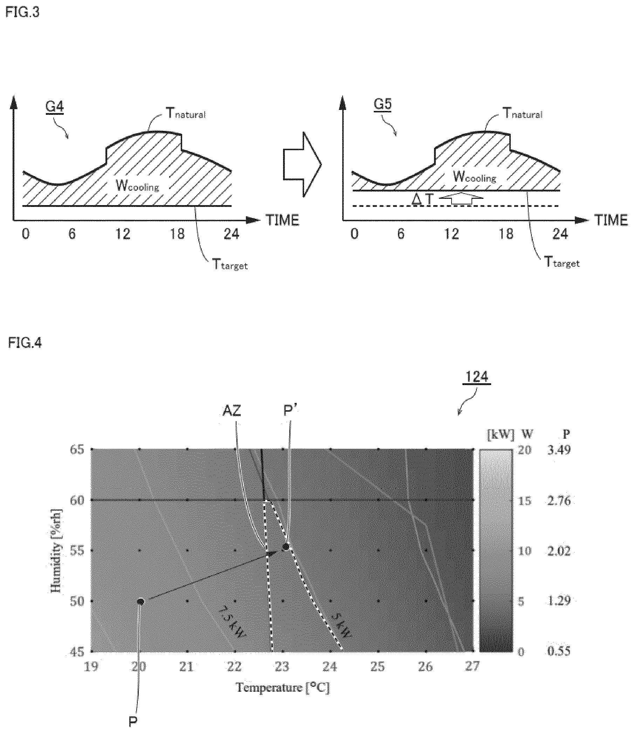

Next, an overview of air conditioning control processing performed by the air conditioning control system 10 will be described with reference to FIGS. 3 and 4.

FIG. 3 is a diagram showing how the target temperature $T_{target}$ of the air conditioning apparatus 200 is changed. The temperature $T_{natural}$ inside the factory indicated by graphs G4 and G5 in FIG. 3 is the same as the temperature $T_{natural}$ inside the factory indicated by the graph G3 in FIG. 2.

As shown in FIG. 3, in summer, the controller 100 increases the target temperature $T_{target}$ to reduce the heat load $W_{cooling}$ at each point in time. On the other hand, in winter, the controller 100 lowers the target temperature $T_{target}$ to reduce the heat load $W_{cooling}$ at each point in time. In this way, the controller 100 adjusts the target temperature $T_{target}$ of the air conditioning apparatus 200 so as to reduce the heat load $W_{cooling}$ at each point in time. In the example of FIG. 3, the target temperature $T_{target}$ is increased by a predetermined offset value $\Delta T$.

Although FIG. 3 shows only an example of adjustment of the target temperature $T_{target}$, the same applies to an example of adjustment of the target humidity $H_{target}$. That is to say, the controller 100 adjusts the target humidity $H_{target}$ of the air conditioning apparatus 200 so as to reduce the heat load $W_{cooling}$ at each point in time.

On the other hand, changing the setting values for the air conditioning apparatus 200 affects the manufacturing quality of workpieces manufactured by the manufacturing apparatus 300. Therefore, the controller 100 changes the setting values for the air conditioning apparatus 200 within a range in which a constant manufacturing quality of workpieces manufactured by the manufacturing apparatus 300 can be maintained. As a result, the controller 100 can reduce the power consumption of the air conditioning apparatus 200 while suppressing degradation of the manufacturing quality of workpieces.

The setting values for the air conditioning apparatus 200 are determined based on power consumption information 124 shown in FIG. 4, for example. FIG. 4 is a diagram showing an example of the power consumption information 124.

The power consumption information 124 is information indicating the correlation between the target temperature in the factory, the target humidity in the factory, and the power consumption of the air conditioning apparatus. The correlation may be defined in a table format, a predetermined calculation formula, or another format.

In one example, the power consumption information 124 is defined in a table format in which the power consumption of the air conditioning apparatus 200 is associated with each combination of the target temperature in the factory and the target humidity in the factory. In another example, the power consumption information 124 is defined by a calculation formula that uses the target temperature in the factory and the target humidity in the factory as explanatory variables and uses the power consumption of the air conditioning apparatus 200 as an obj ective variable.

In the example in FIG. 4, the horizontal axis of the power consumption information 124 indicates the target temperature of the air conditioning apparatus 200. The vertical axis of the power consumption information 124 indicates the target humidity of the air conditioning apparatus 200. The power consumption of the air conditioning apparatus 200 is shaded for each combination of the target temperature and the target humidity.

The example in FIG. 4 shows the power consumption information 124 in summer. In summer, as the target temperature is increased and the target temperature approaches the natural temperature, the power consumption of the air conditioning apparatus 200 decreases. As the target humidity is lowered and the target humidity approaches natural humidity, the power consumption of the air conditioning apparatus 200 decreases.

The controller 100 accepts the setting of an allowable range AZ for the combination of the target temperature and target humidity shown in the power consumption information 124. The allowable range AZ indicates a temperature range and a humidity range in which a constant manufacturing quality of workpieces manufactured by the manufacturing apparatus 300 can be maintained.

The allowable range AZ may be set in advance or may be set by the user freely. The allowable range AZ may be directly input into the power consumption information 124 displayed on the display of the controller 100 or may be set independently from the power consumption information 124.

The controller 100 specifies, from the power consumption information 124, the combination of the target temperature and the target humidity that minimize the power consumption within the allowable range AZ as the setting values for the air conditioning apparatus 200. Thereafter, the controller 100 controls the air conditioning apparatus 200 based on the specified setting value. In the example in FIG. 4, the setting value of the air conditioning apparatus 200 has been changed from "P" to "P". As a result, the controller 100 can reduce the power consumption of the air conditioning apparatus 200 while suppressing degradation of the manufacturing quality of workpieces manufactured by the manufacturing apparatus 300.

<D. Hardware Configuration of Controller 100>

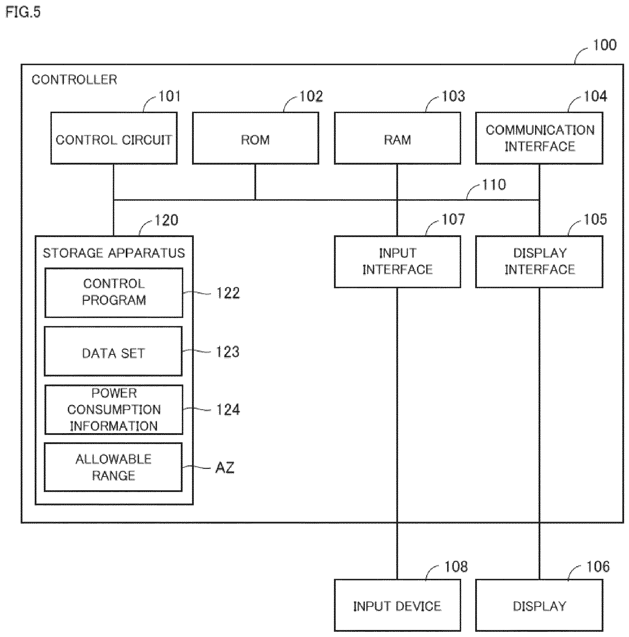

Next, a hardware configuration of the controller 100 will be described with reference to FIG. 5. FIG. 5 is a schematic diagram showing an example of the hardware configuration of the controller 100.

The controller 100 includes a control circuit 101, a ROM (Read Only Memory) 102, a RAM (Random Access Memory) 103, a communication interface 104, a display interface 105, an input interface 107, and a storage apparatus 120. These components are connected to a bus 110.

The control circuit 101 is constituted by, for example, at least one integrated circuit. The integrated circuit may be constituted by, for example, at least one CPU (Central Processing Unit), at least one GPU (Graphics Processing Unit), at least one ASIC (Application Specific Integrated Circuit), at least one FPGA (Field Programmable Gate Array), or a combination of them.

The control circuit 101 controls the operation of the controller 100 by executing various programs such as a control program 122 and an operating system. Upon receiving an instruction to execute various programs, the control circuit 101 reads out the programs from the storage apparatus 120 or the ROM 102 to the RAM 103. The RAM 103 functions as a working memory and temporarily stores various kinds of data necessary for executing various programs.

A LAN (Local Area Network), an antenna, or the like is connected to the communication interface 104. The controller 100 exchanges data with external apparatuses via the communication interface 104. Examples of the external apparatuses include the air conditioning apparatus 200 and the manufacturing apparatus 300.

A display 106 is connected to the display interface 105. The display interface 105 sends an image signal for displaying an image to the display 106 in accordance with a command from the control circuit 101 or the like. The display 106 is, for example, a liquid crystal display, an organic EL (Electro Luminescence) display, or another type of display device. Note that the display 106 may be formed integrally with the controller 100 or may be formed separately from the controller 100.

An input device 108 is connected to the input interface 107. The input device 108 is, for example, a mouse, a keyboard, a touch panel, or another device capable of receiving user operations. Note that the input device 108 may be formed integrally with the controller 100 or may be formed separately from the controller 100.

The storage apparatus 120 is, for example, a storage medium such as a hard disk or a flash memory. The storage apparatus 120 stores the control program 122, a data set 123, the power consumption information 124 generated from the data set 123, the above-described allowable range AZ, and the so on. The storage location of these pieces of information is not limited to the storage apparatus 120, and they may be stored in the storage area of the control circuit 101 (for example, a cache memory or the like), the ROM 102, the RAM 103, an external device, or the like.

Note that the control program 122 may be provided not as a standalone program but as a part of a given program. In this case, the various kinds of processing specified in the control program 122 are realized in cooperation with the given program. Even in the case of such a program that does not include some of the modules, it does not depart from the spirit of the control program 122 according to the present embodiment. Furthermore, some or all of the functions provided by the control program 122 may be realized by dedicated hardware. Furthermore, the controller 100 may be formed as a so-called cloud service in which at least one server performs a part of the processing of the control program 122.

<E. Hardware Configuration of Air Conditioning Apparatus 200>

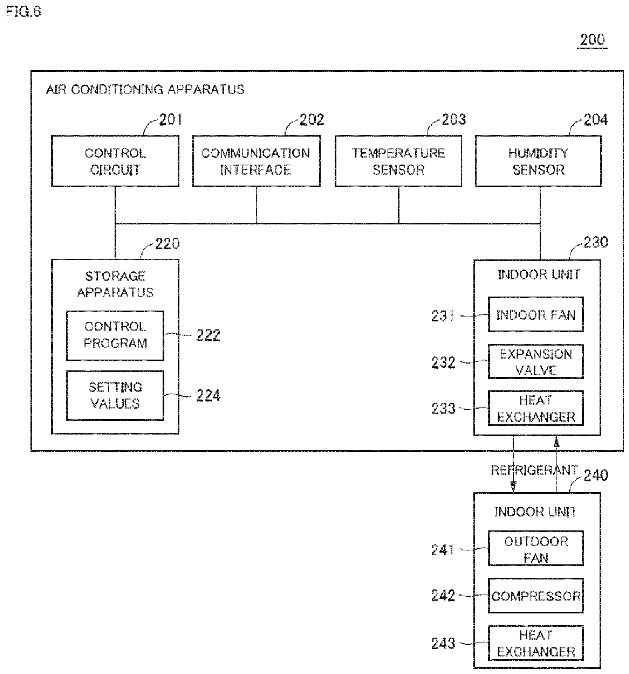

Next, a hardware configuration of the air conditioning apparatus 200 will be described with reference to FIG. 6. FIG. 6 is a schematic diagram showing an example of a hardware configuration of the air conditioning apparatus 200.

The air conditioning apparatus 200 includes a control circuit 201, a communication interface 202, a temperature sensor 203, a humidity sensor 204, a storage apparatus 220, an indoor unit 230, and an outdoor unit 240.

The control circuit 201 is constituted by, for example, at least one integrated circuit. The integrated circuit may be constituted by, for example, at least one CPU, at least one GPU, at least one ASIC, at least one FPGA, or a combination of them.

A network device such as an antenna is connected to the communication interface 202. The air conditioning apparatus 200 exchanges data with an external device via the communication interface 202. Examples of the external devices include the controller 100 and the manufacturing apparatus 300.

The temperature sensor 203 measures the temperature inside the factory. For example, a thermistor or the like is used as the temperature sensor 203.

The humidity sensor 204 measures the humidity inside the factory. For example, a polymer resistance type humidity sensor or the like is used as the humidity sensor 204.

The storage apparatus 220 is, for example, a storage medium such as a hard disk or a flash memory. The storage apparatus 220 stores a control program 222, setting values 224, and so on. The setting values 224 include, for example, a target temperature, a target humidity, and other parameters. The storage location of the control program 222 and the setting values 224 is not limited to the storage apparatus 220, and they may be stored in the storage area of the control circuit 101 (for example, a cache memory or the like), the ROM 102, the RAM 103, an external device, or the like.

The indoor unit 230 includes an indoor fan 231, an expansion valve 232, and a heat exchanger 233. The outdoor unit 240 includes an outdoor fan 241, a compressor 242, and a heat exchanger 243.

The air conditioning apparatus 200 realizes heating operation and cooling operation by exchanging heat between air and a refrigerant. During cooling operation, the refrigerant circulates through the compressor 242, the heat exchanger 243, the expansion valve 232, and the heat exchanger 233 in this order.

More specifically, the compressor 242 compresses the refrigerant sent from the indoor unit 230, thereby increasing the temperature of the refrigerant. The compressor 242 is, for example, a single rotary compressor, a twin rotary compressor, a hyper wave rotary compressor, or the like.

The heat exchanger 243 performs heat exchange between the air outside the factory taken in by the outdoor fan 241 and the refrigerant sent from the compressor 242, thereby cooling the refrigerant. The cooled refrigerant is sent to the expansion valve 232 of the indoor unit 230.

The expansion valve 232 further cools the refrigerant by expanding the refrigerant. The refrigerant cooled by the expansion valve 232 is sent to the heat exchanger 233.

The heat exchanger 233 performs heat exchange between the air inside the factory taken in by the indoor fan 231 and the refrigerant cooled by the expansion valve 232, thereby cooling the air taken in from inside the factory. The indoor fan 231 sends the air cooled by the heat exchanger 233 to the factory. As a result, the inside of the factory is cooled. The heat exchanger 233 sends the refrigerant after heat exchange to the compressor 242 of the outdoor unit 240.

In this way, during cooling operation, the refrigerant circulates through the compressor 242, the heat exchanger 243, the expansion valve 232, and the heat exchanger 233 in this order. On the other hand, during heating operation, the refrigerant circulates through the compressor 242, the heat exchanger 233, the expansion valve 232, and the heat exchanger 243 in this order.

<F. Hardware Configuration of Machine Tool 300A>

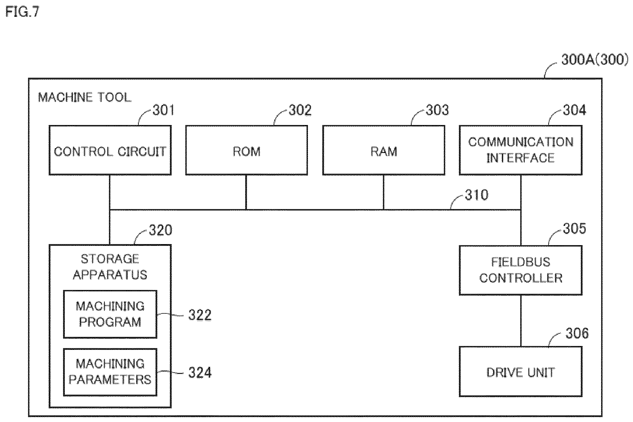

Next, a hardware configuration of a machine tool 300A, which is an example of the manufacturing apparatus 300, will be described with reference to FIG. 7. FIG. 7 is a schematic diagram showing an example of a hardware configuration of the machine tool 300A.

The machine tool 300A includes a control circuit 301, a ROM 302, a RAM 303, a communication interface 304, a fieldbus controller 305, and a storage apparatus 320. These components are connected to an internal bus 309.

The control circuit 301 is constituted by, for example, at least one integrated circuit. The integrated circuit may be constituted by, for example, at least one CPU, at least one GPU, at least one ASIC, at least one FPGA, or a combination of them.

The control circuit 301 controls the operation of the machine tool 300A by executing various programs such as a machining program 322. The machining program 322 is a program for realizing workpiece machining. Upon receiving an instruction to execute the machining program 322, the control circuit 301 reads out the machining program 322 from the ROM 302 to the RAM 303. The RAM 303 functions as a working memory and temporarily stores various kinds of data necessary for executing the machining program 322.

A LAN, a WLAN, Bluetooth (registered trademark), or the like is connected to the communication interface 304. The machine tool 300A exchanges data with external devices via the communication interface 304. Examples of the external devices include the controller 100 and the air conditioning apparatus 200.

The fieldbus controller 305 is a communication unit for realizing communication with various drive units 306 connected to a fieldbus. Examples of the drive units 306 include a motor for driving a spindle, a motor for driving a workpiece installation table, and so on.

The storage apparatus 320 is, for example, a storage medium such as a hard disk or a flash memory. The storage apparatus 320 stores the machining program 322, machining parameters 324, and so on. The storage location of the machining program 322 and the machining parameters 324 is not limited to the storage apparatus 320, and they may be stored in the storage area of the control circuit 301 (for example, a cache memory), the ROM 302, the RAM 303, an external device (for example, a server), or the like.

<G. Functional Configuration of Controller 100>

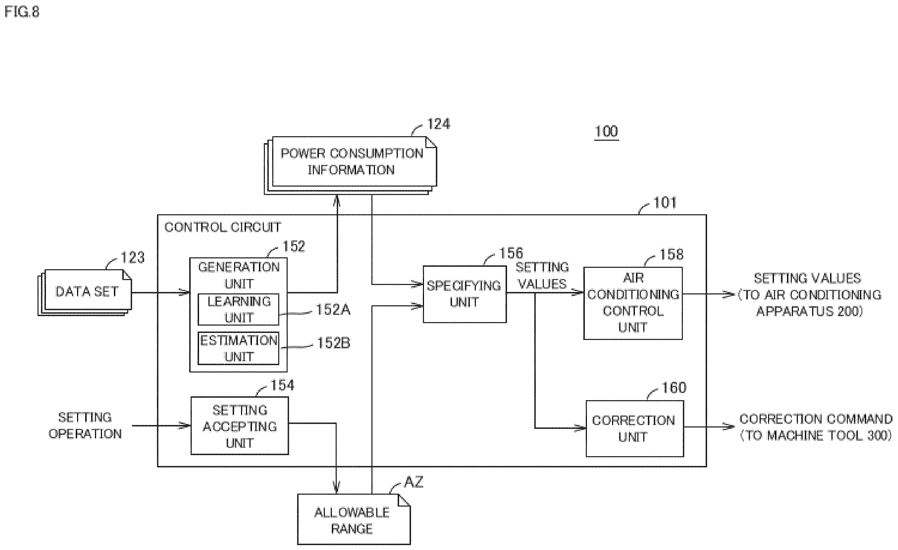

Next, a functional configuration for realizing air conditioning control processing will be described with reference to FIGS. 8 to 16. FIG. 8 is a diagram showing an example of a functional configuration of the controller 100.

As shown in FIG. 8, the control circuit 101 of the controller 100 includes a generation unit 152, a setting accepting unit 154, a specifying unit 156, an air conditioning control unit 158, and a correction unit 160 as functional components. The following describes these components in order.

Note that the functional components can be arranged freely. In one example, part or all of the functional components shown in FIG. 8 may be implemented in the above-described air conditioning apparatus 200 (see FIG. 1) or in another apparatus.

(G1. Generation Unit 152)

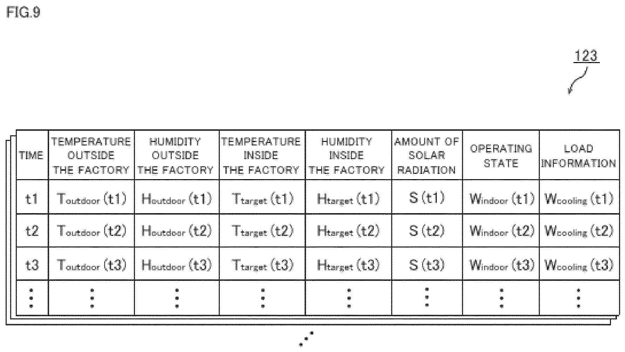

First, the functions of the generation unit 152 shown in FIG. 8 will be described with reference to FIGS. 9 to 11.

The generation unit 152 generates the above-described power consumption information 124 based on the predetermined data set 123. Any method can be used to generate the power consumption information 124.

In one example, the generation unit 152 includes a learning unit 152A and an estimation unit 152B. The learning unit 152A generates a model MD through predetermined machine learning processing using the learning data set 123. Thereafter, the estimation unit 152B generates the power consumption information 124 from the generated trained model MD.

FIG. 9 is a diagram showing an example of the learning data set 123. In the data set 123, for each point in time in the past, the temperature outside the factory at the point in time, the humidity outside the factory at the point in time, the temperature inside the factory at the point in time, the humidity inside the factory at the point in time, the amount of solar radiation outside the factory at the point in time, the operating state of the manufacturing apparatus 300 at the point in time, and load information regarding the air conditioning apparatus 200 at the point in time are associated with each other.

The temperature outside the factory shown in the data set 123 indicates the outdoor temperature around the factory. This temperature may be actually measured near the factory using a sensor such as a thermometer or may be downloaded from an external site or the like that provides weather information.

The humidity outside the factory shown in the data set 123 indicates the outdoor humidity around the factory. This humidity may be actually measured near the factory using a sensor such as a hygrometer or may be downloaded from an external site or the like that provides weather information.

The temperature inside the factory shown in the data set 123 may be a set temperature (target temperature) of the manufacturing apparatus 300 or may be an actual temperature measured inside the factory. The actual measured temperature may be acquired from the above-described temperature sensor 203 (see FIG. 6) or acquired from another temperature sensor installed in the factory.

The humidity inside the factory shown in the data set 123 may be a set humidity (target humidity) for the manufacturing apparatus 300 or may be an actual measured humidity measured inside the factory. The actual measured humidity may be acquired from the above-described humidity sensor 204 (see FIG. 6) or acquired from another humidity sensor installed in the factory.

The amount of solar radiation shown in the data set 123 indicates the amount of sunlight with which the factory was irradiated. In one example, this amount of solar radiation is expressed in hours of sunshine per unit time. Alternatively, the amount of solar radiation is expressed in watts per square meter (i.e., W/m). This amount of solar radiation is downloaded from an external site or the like that provides weather information.

The operating state shown in the data set 123 indicates the amount of operation of the manufacturing apparatus 300 installed in the factory. The amount of operation may be expressed, for example, as the power consumption of the manufacturing apparatus 300 or the operating time of the manufacturing apparatus 300 per unit time.

The load information shown in the data set 123 indicates the load on the air conditioning apparatus 200 installed in the factory. In one example, the load information may be expressed as the power consumption of the air conditioning apparatus 200 or may be expressed as the heat load on the air conditioning apparatus 200.

The learning unit 152A generates a model MD through predetermined machine learning processing using the learning data set 123. The machine learning processing performed by the learning unit 152A may be deep learning, RNN (Recurrent Neural Network), support vector machine, or another learning method. The following describes a method for generating a model MD using RNN, for example.

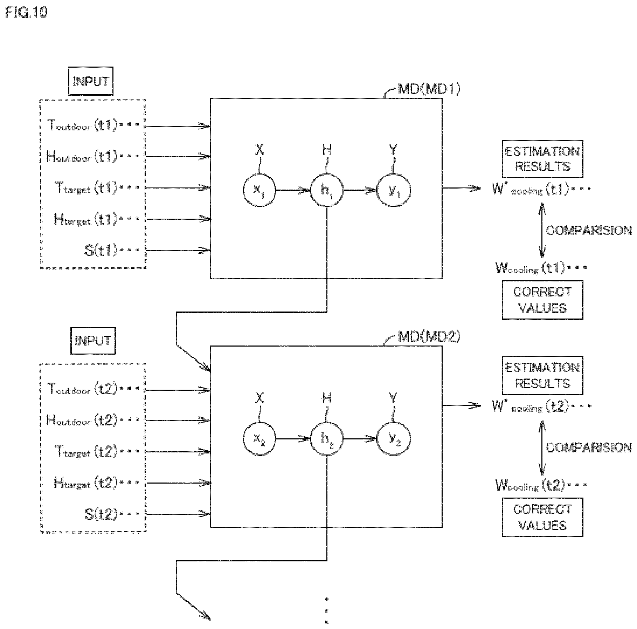

FIG. 10 is a diagram schematically showing the process of learning processing performed by the learning unit 152A. FIG. 10 shows a model MD1 in an initial state and a model MD2 whose parameters have been updated for the first time. Hereinafter, the models MD1 and MD2 will also be referred to as the model MD unless they are particularly distinguished from each other. The model MD includes an input layer X, an intermediate layer H, and an output layer Y

The input layer X receives inputs of the temperature $T_{outdoor}(t)$ outside the factory during a predetermined period, the humidity $H_{outdoor}(t)$ outside the factory during the predetermined period, the temperature $T_{target}(t)$ inside the factory during the predetermined period, the humidity $H_{target}(t)$ inside the factory during the predetermined period, and the amount $S(t)$ of solar radiation inside the factory during the predetermined period, as input features.

The intermediate layer H includes a plurality of layers. The number of layers included in the intermediate layer H can be freely determined. Each layer includes a plurality of units. Each of the units included in each layer of the intermediate layer H is connected to each unit in the previous layer and each unit of the next layer. Each unit in each layer receives an output value from each unit in the previous layer, multiplies each output value by a weight, integrates the multiplication results, adds (or subtracts) a predetermined bias to (from) the integration result, inputs the addition result (or subtraction result) to a predetermined function (for example, sigmoid function), and outputs the output value of the function to each unit of the next layer.

The output layer Y includes a plurality of units. Each of the units included in the output layer Y is connected to each unit in the final layer of the intermediate layer H. Each unit in the output layer Y receives an output value from each unit in the final layer in the intermediate layer H, multiplies each output value by a weight, integrates the multiplication results, adds (or subtracts) a predetermined bias to (from) the integration result, inputs the addition result (or subtraction result) to a predetermined function (for example, sigmoid function), and outputs the output result of the function as an output value. This output value indicates the load on the air conditioning apparatus 200 during a predetermined period.

In a more specific example, the learning unit 152A inputs input features at times t1, t2, and so on specified in the learning data set 123 to the model MD. The learning unit 152A compares estimated loads $W'_{cooling}(t1)$, $W'_{cooling}(t2)$, and so on obtained as a result with the correct values $W_{cooling}(t1)$, $W_{cooling}(t2)$, and so on specified in the learning data set 123. Thereafter, the learning unit 152A updates various parameters (for example, weights and biases) included in the model MD so that the estimated loads approach the correct values.

Next, the learning unit 152A inputs input features at times t2, t3, and so on specified in the learning data set 123 to the model MD. In the second and subsequent learning, the learning unit 152A inputs some of the outputs from the intermediate layer H in the previous learning process to the input layer X. In this way, in RNN, the outputs from one layer are not only used as the inputs to the next layer, but also inputs to the input layer X in the next learning process. As a result, temporal information is passed.

The learning unit 152A compares estimated loads $W'_{cooling}(t2)$, $W'_{cooling}(t3)$, and so on obtained as a result with the correct values $W_{cooling}(t2)$, $W_{cooling}(t3)$, and so on specified in the learning data set 123. Thereafter, the learning unit 152Aupdates various parameters (for example, weights and biases) included in the model MD so that the estimated loads approach the correct values.

In this way, the learning unit 152Arepeatedly performs processing to update the parameters included in the model MD. As a result, the accuracy of the load estimation by the model MD improves.

Note that the learning unit 152A does not necessarily need to use all the pieces of learning data included in the learning data set 123 in order to generate the model MD, and may use some of the pieces of learning data included in the learning data set 123 to generate the model MD.

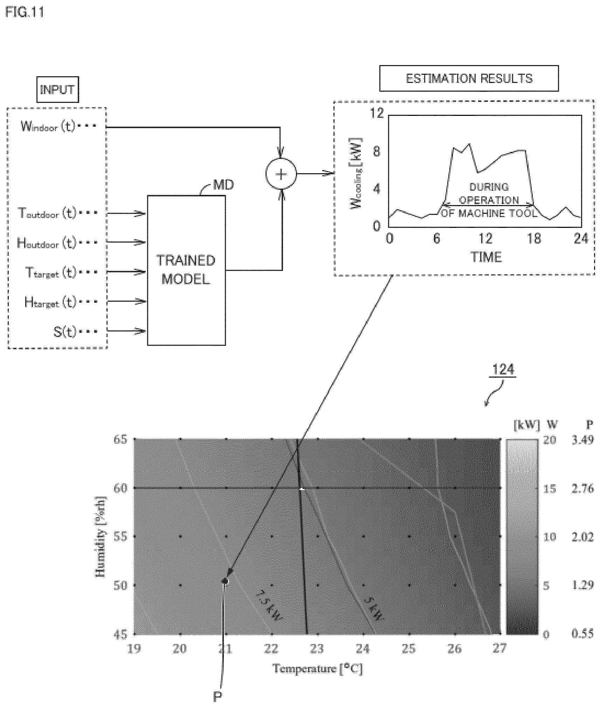

The estimation unit 152B generates the power consumption information 124 from the generated trained model MD. FIG. 11 is a diagram schematically showing a process of the processing performed by the estimation unit 152B.

The estimation unit 152B inputs, to the trained model MD, the temperature $T_{outdoor}(t)$ outside the factory during a predetermined period, the humidity $H_{outdoor}(t)$ outside the factory during the predetermined period, the temperature $T_{target}(t)$ inside the factory during the predetermined period, the humidity $H_{target}(t)$ inside the factory during the predetermined period, and the amount $S(t)$ of solar radiation inside the factory during the predetermined period, as input features. The predetermined period may be a past period, a period including the present, or a future period. The input features to the model MD may be obtained from the above-described learning data set 123 or acquired from another data set.

Thereafter, the estimation unit 152B adds the amount $W_{indoor}(t)$ of heat generated in the factory to the output value from the model MD. As a result, the heat load $W_{cooling}(t)$ at each point in time is output as an estimation result.

Next, the estimation unit 152B calculates a power consumption $P_{cooling}(t)$ from the heat load $W_{cooling}(t)$ at each point in time based on a predetermined conversion formula (for example, Formula (3) described below).

Thereafter, the estimation unit 152B calculates a sample value from the power consumption $P_{cooling}(t)$. The sample value may be, for example, the average value of the power consumption $P_{cooling}(t)$ or the maximum value of the power consumption $P_{cooling}(t)$. The calculated sample value is stored in the power consumption information 124 after being associated with the corresponding combination of temperature and humidity.

The combination of the target temperature $T_{target}(t)$ and the target humidity $H_{target}(t)$ input to the trained model MD is used as the association target temperature and humidity. Typically, the target temperature $T_{target}(t)$ and the target humidity $H_{target}(t)$ are constant so that the factory environment does not change. Therefore, the association target temperature and humidity are also determined to be one point.

In one example, it is assumed that the target temperature $T_{target}(t)$ is 21°C and the target humidity $H_{target}(t)$ is 50% rh. If this is the case, the sample value of the power consumption $P_{cooling}(t)$ is stored in the power consumption information 124 after being associated with the combination of 21°C and 50% rh (see the point "P" shown in FIG. 11).

The estimation unit 152B acquires a sample value of power consumption $P_{cooling}(t)$ for each combination of temperature and humidity. As a result, power consumption information 124 is generated in which the power consumption of the air conditioning apparatus 200 is expressed for each combination of target temperature and target humidity.

Preferably, the generation unit 152 generates power consumption information 124 for each period. The unit of the period may be a season, a month, or a day.

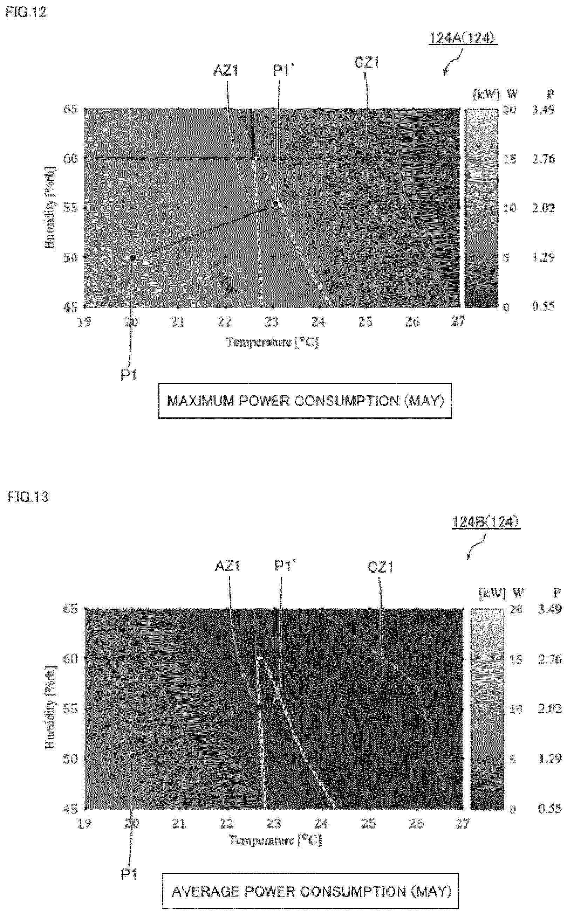

FIG. 12 is a diagram showing power consumption information 124A during May. The power consumption information 124A is generated using a data group belonging to May in the data set 123. The power consumption information 124A defines the maximum power consumption of the air conditioning apparatus 200 for each combination of the target temperature in the factory and the target humidity in the factory.

FIG. 13 is a diagram showing power consumption information 124B during May. The power consumption information 124B is generated using a data group belonging to May in the data set 123. The power consumption information 124B defines the average power consumption of the air conditioning apparatus 200 for each combination of the target temperature in the factory and the target humidity in the factory.

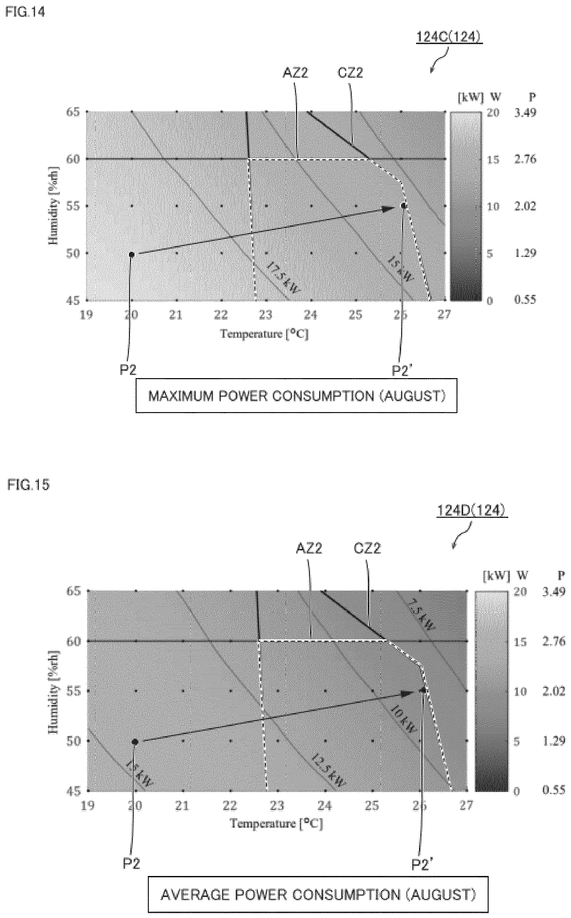

FIG. 14 is a diagram showing power consumption information 124C during August. The power consumption information 124C is generated using a data group belonging to August in the data set 123. The power consumption information 124C defines the maximum power consumption of the air conditioning apparatus 200 for each combination of the target temperature in the factory and the target humidity in the factory.

FIG. 15 is a diagram showing power consumption information 124D during August. The power consumption information 124D is generated using a data group belonging to August in the data set 123. The power consumption information 124D defines the average power consumption of the air conditioning apparatus 200 for each combination of the target temperature in the factory and the target humidity in the factory.

The generation unit 152 associates each of the generated power consumption information 124A to 124D with a period, and thereafter stores the power consumption information 124A to 124D in the storage apparatus 120 (see FIG. 5) described above. Hereinafter, the power consumption information 124A to 124D will also be referred to as power consumption information 124 unless they are particularly distinguished from each other.

Although an example in which the power consumption information 124 is generated through machine learning processing has been described above, the method of generating the power consumption information 124 is not limited to this example. In one example, first, the generation unit 152 calculates power consumption from each piece of load information specified in the data set 123 based on a predetermined conversion formula (for example, Formula (3) described below). Thereafter, the generation unit 152 associates the calculated power consumption with the corresponding combination of temperature and humidity and stores the power consumption in the power consumption information 124. In this way, the power consumption information 124 may be generated using a simpler method.

(G2. Setting Accepting Unit 154)

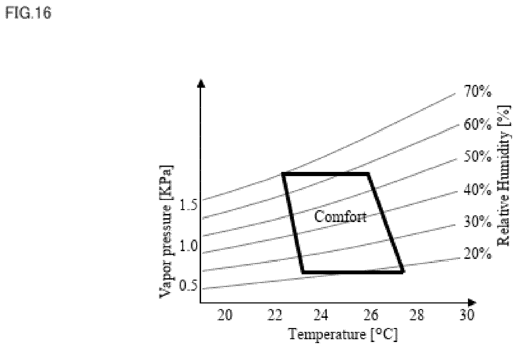

Next, the functions of the setting accepting unit 154 shown in FIG. 8 will be described with reference to FIG. 16 while referring to FIGS. 12 to 15 described above.

The setting accepting unit 154 accepts the setting of the allowable range AZ for the combination of the target temperature and target humidity shown in the power consumption information 124. For example, the setting operation for setting the allowable range AZ is accepted by the above-described input device 108 (see FIG. 5).

The allowable range AZ indicates a temperature range and a humidity range in which a constant manufacturing quality of workpieces manufactured by the manufacturing apparatus 300 can be maintained. That is to say, the allowable range AZ indicates the temperature range and humidity range of allowable thermal displacement. The allowable range AZ may be set in advance or may be set by the user freely. The allowable range AZ may be directly input into the power consumption information 124 displayed on the display of the controller 100 or may be set independently from the power consumption information 124.

FIGS. 12 and 13 show an allowable range AZ 1 set in the power consumption information 124A and 124B. The humidity is set at 60% th or less, for example, in consideration of the range in which metal does not rust.

Preferably, the allowable range AZ1 is set within a comfort zone CZ1 in which humans feel comfortable. In other words, the setting accepting unit 154 does not accept settings for the allowable range AZ1 for a range that exceeds the comfort zone CZ1.

FIGS. 14 and 15 show an allowable range AZ2 set in the power consumption information 124C and 124D. The humidity is set at 60% th or less, for example, in consideration of the range in which metal does not rust. The allowable range AZ2 is set within a comfort zone CZ2.

FIG. 16 is a diagram showing an example of a comfort chart. The comfort zones CZ1 and CZ2 are specified based on the comfort chart shown in FIG. 16, for example.

(G3. Specifying Unit 156)

Next, the functions of the specifying unit 156 shown in FIG. 8 will be described with reference to FIGS. 12 to 15 described above.

The specifying unit 156 acquires the power consumption information 124 corresponding to the period to which the current point in time belongs, from among the power consumption information 124A to 124D. Next, the specifying unit 156 specifies, from the power consumption information 124, the combination of the target temperature and the target humidity that minimize the power consumption within the allowable range AZ set in advance as the setting values for the air conditioning apparatus 200. The specified setting values is output to the air conditioning control unit 158.

In one example, it is assumed that the current month is May. In this case, the specifying unit 156 acquires the power consumption information 124A and 124B associated with May. In the example shown in FIGS. 12 and 13, a setting value P1' that minimizes power consumption within the allowable range AZ1 is specified. As a result, the setting value of the air conditioning apparatus 200 is changed from "P1" to "P1‴".

In another example, it is assumed that the current month is August. In this case, the specifying unit 156 acquires the power consumption information 124C and 124D associated with August. In the example shown in FIGS. 14 and 15, a setting value P2' that minimizes power consumption within the allowable range AZ2 is specified. As a result, the setting value of the air conditioning apparatus 200 is changed from "P2" to "P2‴".

(G4. Air Conditioning Control Unit 158)

Next, the functions of the air conditioning control unit 158 shown in FIG. 8 will be described.

The air conditioning control unit 158 controls the air conditioning apparatus 200 based on the setting value specified by the specifying unit 156. In one example, the air conditioning control unit 158 transmits the setting value to the air conditioning apparatus 200. In response, the air conditioning apparatus 200 adjusts the temperature and humidity inside the factory based on the setting value.

(G5. Correction Unit 160)

Next, the functions of the correction unit 160 shown in FIG. 8 will be described.

The correction unit 160 corrects at least one of the machining program 322 (see FIG. 7) related to the manufacture of workpieces in the manufacturing apparatus 300 and the machining parameters 324 (see FIG. 7) related to the manufacture of workpieces in the manufacturing apparatus 300 based on the setting values for the air conditioning apparatus 200 specified by the specifying unit 156.

More specifically, the correction unit 160 estimates the amount of thermal displacement of the workpieces or the tool based on the difference between the setting values for the air conditioning apparatus 200 before the change and the setting values for the air conditioning apparatus 200 after the change. The amount of thermal displacement is calculated using a thermal displacement model generated in advance.

In one example, the thermal displacement model is defined by a predetermined calculation formula (for example, Formula (4) described below) that uses the amount of temperature change and the amount of humidity change as explanatory variables and uses the amount of thermal displacement as an objective variable.

In another example, the thermal displacement model is generated through learning processing using a learning data set. The learning data set includes a plurality of pieces of learning data in each of which the amount of temperature change, the amount of humidity change, and the amount of thermal displacement are associated with each other. The internal parameters of the thermal displacement model are optimized in advance through the learning processing using such a learning data set. Various machine learning algorithms can be adopted as a learning method for generating a thermal displacement model. In one example, deep learning support vector machine, or the like may be adopted as the machine learning algorithm. The trained thermal displacement model receives inputs of the amount of temperature change and the amount of humidity change, and outputs the amount of thermal displacement as an estimation result.

The correction unit 160 corrects the machining parameters 324 of the manufacturing apparatus 300 based on the amount of thermal displacement output from the thermal displacement model. Examples of the machining parameters 324 to be corrected include shape parameters indicating the shape of the tool and wear parameters indicating the amount of wear of the tool.

The shape parameters are parameters for specifying the shape of the tool. By setting the shape parameters, the manufacturing apparatus 300 can machine workpieces based on the grasped shape of the tool. Typically, the shape parameters are expressed as offset values from a predetermined reference point. The shape parameters include, for example, the width in the X direction from the predetermined reference point, the width in the Z direction from the predetermined reference point, the width in the Y direction from the predetermined reference point, and the diameter of the tool from the predetermined reference point.

The wear parameters are parameters for specifying the amount of wear of the tool. By setting the wear parameters, the manufacturing apparatus 300 can machine workpieces based on the grasped amount of wear of the tool. Typically, the wear parameters are expressed as offset values from a predetermined reference point. The wear parameters include, for example, the wear width of the tool in the X direction from the predetermined reference point, the wear width of the tool in the Z direction from the predetermined reference point, the wear width of the tool in the Y direction from the predetermined reference point, and the amount of wear in the radial direction of the tool from the predetermined reference point.

Although an example in which the machining parameters 324 are corrected based on the amount of thermal displacement corresponding to a change in the setting values for the air conditioning apparatus 200 has been described above, the correction unit 160 may correct the machining program 322 based on the amount of thermal displacement. The machining program 322 defines variables related to the machining of the workpieces, such as the amount of movement of the spindle, for example. The correction unit 160 corrects the amount of movement of the spindle specified in the machining program 322, based on the amount of thermal displacement corresponding to a change in the setting values for the air conditioning apparatus 200, for example.

<H. Flow of Allowable Range Setting>

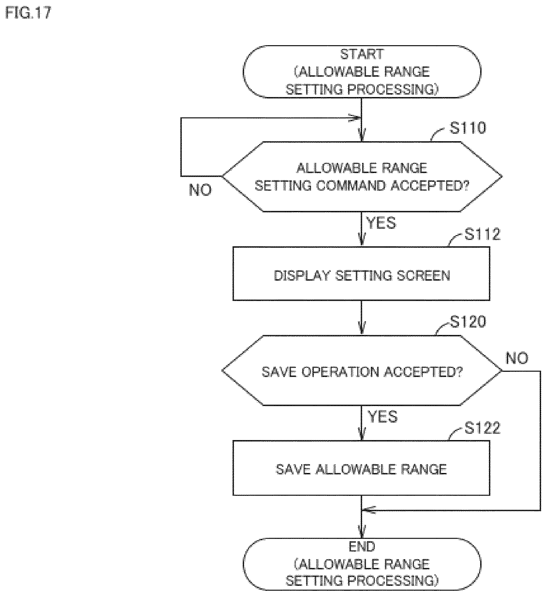

Next, a flow related to processing performed to set the above-described allowable range AZ will be described with reference to FIG. 17. FIG. 17 is a diagram showing an example of a flowchart related to the processing performed to set the allowable range AZ.

The processing shown in FIG. 17 is realized by the control circuit 101 of the controller 100 executing the control program 122 described above. In another aspect, part or all of the processing may be performed by a circuit device or other hardware.

In step S110, the control circuit 101 determines whether or not a setting command to set the allowable range AZ for the combination of the target temperature and target humidity shown in the power consumption information 124 has been accepted. For example, the setting command is issued in response to the user performing a setting change operation using the input device 108. If the control circuit 101 determines that the setting command to set the allowable range AZ has been accepted (YES in step S110), the control circuit 101 switches the control to step S112. Otherwise (NO in step S110), the control circuit 101 executes the processing in step S110 again.

In step S112, the control circuit 101 functions as the above-described setting accepting unit 154 and displays a setting screen to be used to set the allowable range AZ. The setting screen is displayed on the above-described display 106, for example.

Preferably, the setting screen displays the power consumption information 124 shown in FIG. 4 and accepts specification of a range for the target temperature shown in the power consumption information 124. Also, the setting screen accepts specification of a range for the target humidity shown in the power consumption information 124.

In step S120, the control circuit 101 determines whether or not a save operation performed to save the allowable range AZ has been accepted. For example, the save operation is accepted in response to a save button on the above-described setting screen being pressed. If the control circuit 101 determines that the save operation performed to save the allowable range AZ has been accepted (YES in step S120), the control circuit 101 switches the control to step S122. Otherwise (NO in step S120), the control circuit 101 terminates the processing shown in FIG. 17.

In step S122, the control circuit 101 saves the allowable range AZ set in step S112 in the storage apparatus 120.

<I. Flow of Allowable Range Setting>

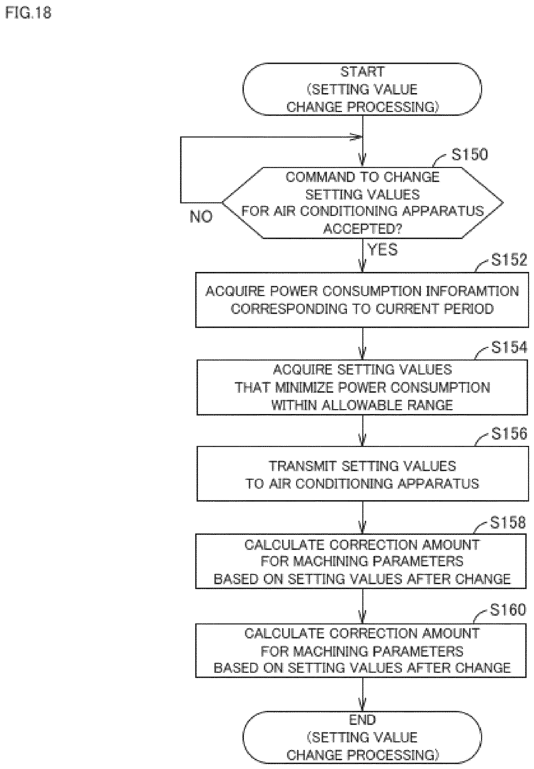

Next, a flow related to setting value changing processing for the air conditioning apparatus 200 will be described with reference to FIG. 18. FIG. 18 is a diagram showing an example of a flowchart related to setting value changing processing for the air conditioning apparatus 200.

The processing shown in FIG. 18 is realized by the control circuit 101 of the controller 100 executing the control program 122 described above. In another aspect, part or all of the processing may be performed by a circuit device or other hardware.

The control circuit 101 determines whether or not a change command to change the setting values for the air conditioning apparatus 200 has been accepted. In one example, the change command is issued in response to accepting an operation to change the setting values for the air conditioning apparatus 200 from the user. In another example, the change command is issued based on the arrival of a change time registered in advance in the schedule.

If the control circuit 101 determines that the change command to change the setting values for the air conditioning apparatus 200 has been accepted (YES in step S150), the control circuit 101 switches the control to step S152. Otherwise (NO in step S150), the control circuit 101 executes the processing in step S150 again.

In step S152, the control circuit 101 acquires the power consumption information 124 corresponding to the current period (for example, the current season). Also, the control circuit 101 acquires the allowable range AZ set in the acquired power consumption information 124.

In step S154, the control circuit 101 functions as the above-described specifying unit 156 (see FIG. 8) and specifies the combination of the target temperature and the target humidity that minimize power consumption within the allowable range AZ as the setting values for the air conditioning apparatus 200, based on the power consumption information 124 acquired in step S152.

In step S156, the control circuit 101 functions as the above-described air conditioning control unit 158 (see FIG. 8) and transmits the setting value specified in step S154 to all the air conditioning apparatuses 200 in the factory. As a result, the setting values for the air conditioning apparatuses 200 are updated.

In step S158, the control circuit 101 functions as the above-described correction unit 160 (see FIG. 8) and calculates the correction amount for the above-described machining program 322 or the above-described machining parameters 324 based on the amount of thermal displacement corresponding to the change in the setting values for the air conditioning apparatus 200. The functions of the correction unit 160 are the same as those described above, and the description thereof will not be repeated.

In step S160, the control circuit 101 transmits the correction amount calculated in step S158 to the manufacturing apparatus 300. As a result, the above-described machining program 322 or the above-described machining parameters 324 are updated.

<J. Evaluation Tests on Model MD>

Next, evaluation tests performed on the above-described model MD will be described with reference to FIGS.

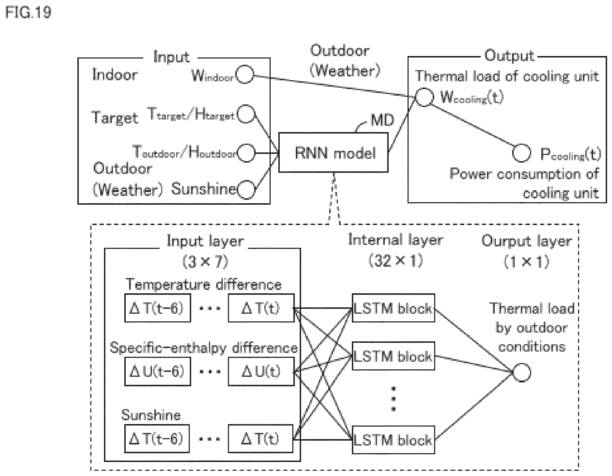

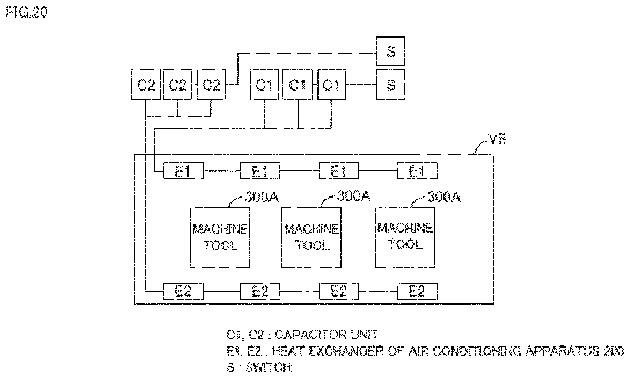

19 to 21. FIG. 19 is a diagram showing the model MD generated for evaluation. FIG. 20 is a diagram showing a test environment VE.

The model MD shown in FIG. 19 is a model of the thermal environment in the test environment VE. The model MD is generated from the data set 123 collected in the test environment VE.

The data set 123 was collected under an idling state (i.e., $W_{cooling}$ = 0kw). The tester uses 60% of the dataset 123 as learning data, the remaining 20% of the dataset 123 as validation data, and the remaining 20% of the dataset 123 as verification data.

The tester used the indoor temperature $T_{indoor}$ and humidity $H_{indoor}$ measured with a thermo-hygrometer as $T_{target}$ and $H_{target,}$ respectively. The tester also collected outside air information from the national meteorological observing system of Japan, AMeDAS. The tester also used dry bulb temperature, relative humidity, and the hours of sunshine as outside temperature, humidity, and the hours of sunshine, respectively.

Furthermore, the tester obtained the heat load in the following manner. First, the tester measured the temperature and humidity at the inlet/outlet of each unit of heat exchangers E1 and E2. Next, the tester calculated the enthalpy difference between the inlet and the outlet. The heat load on each unit was calculated by multiplying the enthalpy difference by the air volume. The tester took the average value as the heat load on each unit.

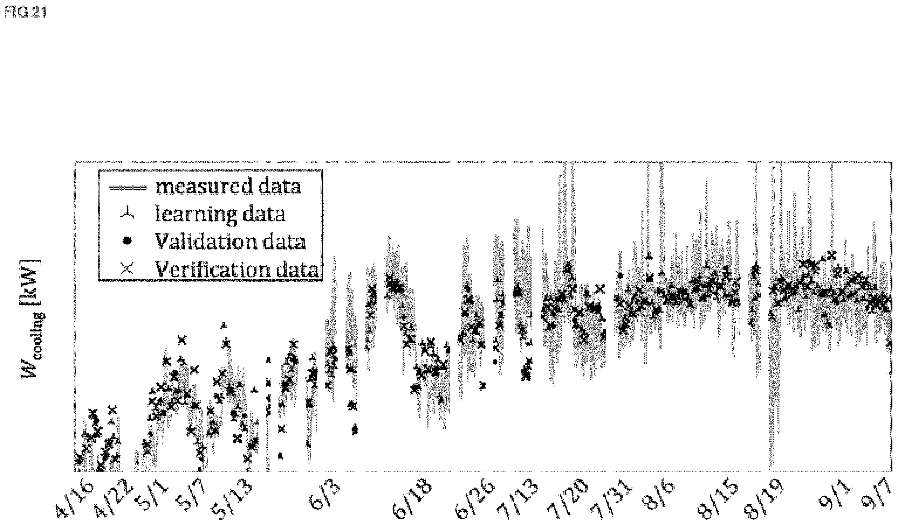

FIG. 21 is a diagram showing evaluation results. In FIG. 21, the actual measured values of the heat load are shown as solid lines, and the estimated values are shown in a scatter diagram. The estimated values shown in the scatter diagram are generally consistent with the actual measured values. The error between the actual measured values and the estimated values is about 10%, so it can be said that the model MD is valid.

In this test, the tester measured the power consumption $P_{coolling}$ [kW] of the air conditioning apparatus 200 using the main switch of the capacitor unit. The relational expression between $W_{coolling}$ and $P_{coolling}$ can be approximated based on the test results as shown in Formula (3) below.

$$[0164] \qquad P_{cooling} = 0.147 \cdot W_{cooling} + 0.550 \ ... \ (3)$$

<K. Influence of Thermal Displacement>

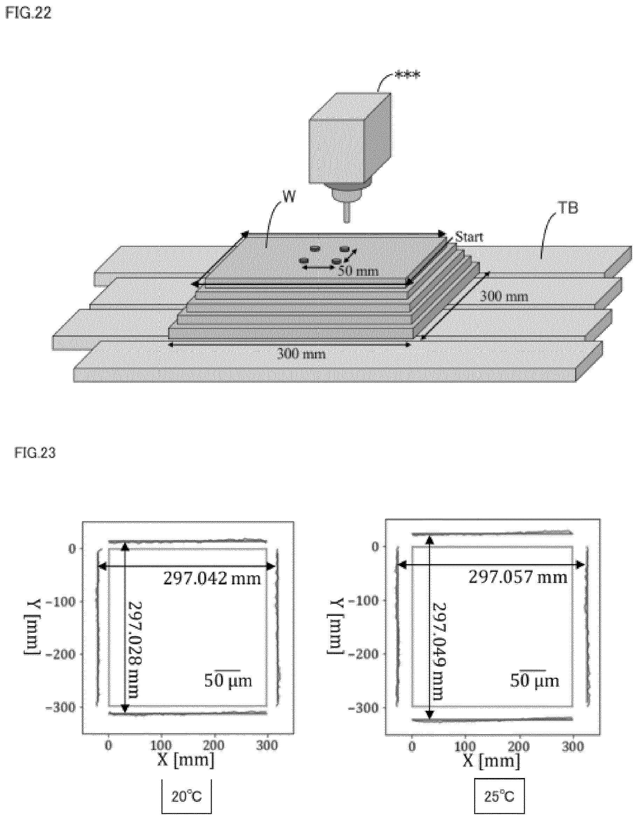

Next, the influence of thermal displacement caused by changing the setting values for the air conditioning apparatus 200 will be described with reference to FIGS. 22 and 23.

As described above, the specifying unit 156 specifies the combination of the target temperature and the target humidity that minimize power consumption within the allowable range AZ as the setting values for the air conditioning apparatus 200. As a result, the indoor temperature changes by the offset value $\Delta T$, causing thermal displacement in the manufacturing apparatus 300 and workpieces. Here, the amount of thermal displacement $d_{workpeice}$ of the workpieces is calculated based on the following Formula (4).

$$[0166] \qquad d_{workpeice} = L \cdot (\alpha_{machine} - \alpha_{workpeice}) \cdot \Delta T \quad ... \ (4)$$

"L" shown in Formula (4) represents the length of the machined part. "$\alpha_{machine}$" represents the thermal expansion coefficient of the manufacturing apparatus 300. "$\alpha_{workpeice}$" represents the thermal expansion coefficient of the workpieces.

The tester conducted a cutting test to verify the validity of the above Formula (4). FIG. 22 is a diagram showing test conditions for the cutting test. As shown in FIG. 22, a pyramid-shaped workpiece measuring 300 mm × 300 mm was used in the test. The tester used an aluminum workpiece in the test. The outer peripheral portion of the workpiece has a stepped shape with a width of 5 mm.

The tester conducted this test under two environments: an environment where the indoor temperature was 20°C and an environment where the indoor temperature was 25°C. Machining of the workpiece was repeated four times every 2 hours while changing the position of the Z-axis of the spindle and keeping the spindle cool.

In addition, the tester set the rotational speed of the spindle to 8750 rpm. Furthermore, the tester set the feed rate of the spindle to 980 mm/min. Furthermore, the tester set the depth of cut in the workpiece to 0.5 mm. Furthermore, the tester set the width of cut in the workpiece to 8 mm. Under these conditions, the amount of thermal displacement $d_{workpeice}$ of the workpiece is estimated to be 19.5 $\mu$m from the above Formula (4).

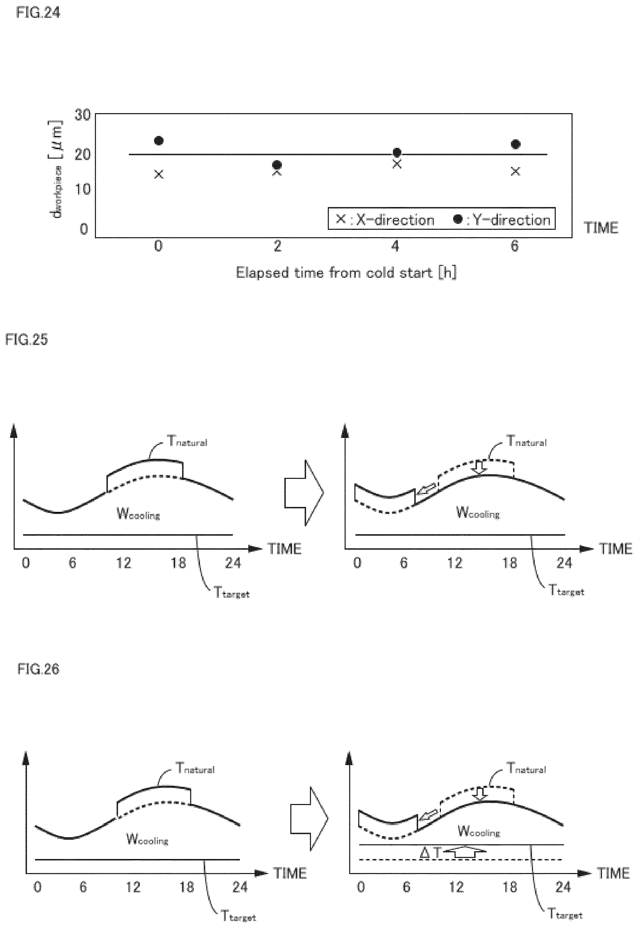

FIG. 23 is a diagram showing the measurement results of the outer periphery of the workpiece at 20°C and the measurement results of the outer periphery of the workpiece at 25°C. The outer periphery of the workpiece was measured using a coordinate measuring device. FIG. 24 is a diagram showing the amount of thermal displacement $d_{workpeice}$ in each test.

The difference between the estimated value of $d_{workpeice}$ and the actual measured value of $d_{workpeice}$ was 1.8

$\mu$m, and the standard deviation of the measurements was 3.0 $\mu$m. These results show that the above Formula (4) is valid. Therefore, the thermal displacement caused in accordance with the offset value $\Delta T$ can be estimated using the above Formula (4).

<L. Application of Offset Method>

Next, an application of the offset method of changing the setting values for the air conditioning apparatus 200 by the above-mentioned offset value $\Delta T$ (see FIG. 3) will be described with reference to FIGS. 25 to 27. FIG. 25 is a diagram showing how an operating time of the manufacturing apparatus 300 is rescheduled.

As shown in FIG. 25, when a rescheduling method that moves the operating time of the manufacturing apparatus 300 from daytime to nighttime is used, the maximum daily heat load $W_{maximum}$ decreases. However, with the rescheduling method, the daily average heat load $W_{average}$ does not change.

FIG. 26 is a diagram showing how the operating time of the manufacturing apparatus 300 is rescheduled. In the example in FIG. 26, the rescheduling method and the offset method are combined.

When the rescheduling method and the offset method are combined, not only the maximum daily heat load $W_{maximum}$ decreases, but also the daily average heat load $W_{average}$ decreases.

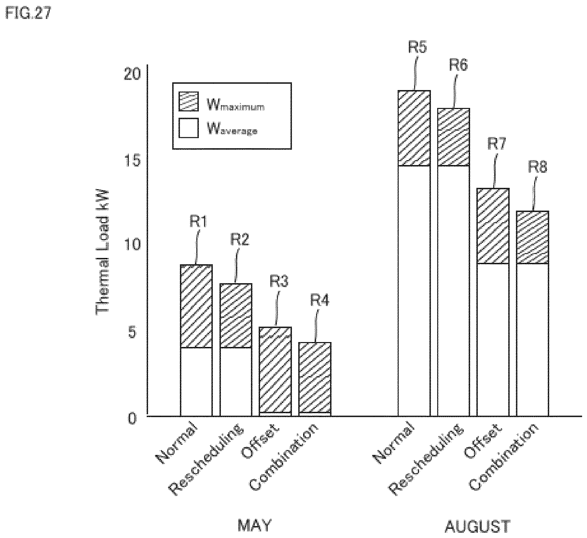

FIG. 27 is a diagram showing simulation results R1 to R8. The simulation results R1 and R5 indicate the maximum heat load $W_{maximum}$ and the average heat load $W_{average}$ in the case where the rescheduling method and the offset method are not adopted.

The simulation results R2 and R6 indicate the maximum heat load $W_{maximum}$ and the average heat load $W_{average}$ in the case where only the rescheduling method is adopted.

The simulation results R3 and R7 indicate the maximum heat load $W_{maximum}$ and the average heat load $W_{average}$ in the case where only the offset method is adopted.

The simulation results R4 and R8 indicate the maximum heat load $W_{maximum}$ and the average heat load $W_{average}$ in the case where both the rescheduling method and the offset method are adopted.

The simulation results R1 to R4 indicate the maximum heat load $W_{maximum}$ and the average heat load $W_{average}$ during May. The simulation results R5 to R8 indicate the maximum heat load $W_{maximum}$ and the average heat load $W_{average}$ during August.

As shown in FIG. 27, the reduction rate of the heat load in the case of the offset method is 30% or more, which is greater than the reduction rate in the case of the rescheduling method. As a result of the rescheduling method and the offset method being combined, not only the maximum heat load $W_{maximum}$ decreases, but also the average heat load $W_{average}$ decreases.

<M. Summary>

As described above, the controller 100 accepts the setting of the allowable range AZ for the combination of the target temperature and the target humidity shown in the power consumption information 124. The allowable range AZ indicates a temperature range and a humidity range in which a constant manufacturing quality of workpieces manufactured by the manufacturing apparatus 300 can be maintained.

The controller 100 specifies, from the power consumption information 124, the combination of the target temperature and the target humidity that minimize the power consumption within the allowable range AZ as the setting values for the air conditioning apparatus 200. Thereafter, the controller 100 controls the air conditioning apparatus 200 based on the specified setting value.

As a result, the controller 100 can reduce the power consumption of the air conditioning apparatus 200 while suppressing degradation of the manufacturing quality of workpieces manufactured by the manufacturing apparatus 300.

The embodiments disclosed herein should be considered to be illustrative in all respects and not restrictive. The scope of the present invention is indicated by the claims rather than the above description, and it is intended that equivalent meanings and all changes within the scope of the claims are included therein.

List of Reference Numerals

10      Air Conditioning Control System
100     Controller
101     Control Circuit
102     ROM
103     RAM

| | |
|---|---|
| 104 | Communication Interface |
| 105 | Display Interface |
| 106 | Display |
| 107 | Input Interface |
| 108 | Input Device |
| 110 | Bus |
| 120 | Storage Apparatus |
| 122 | Control Program |
| 123 | Data Set |
| 124 | Power Consumption Information |
| 124A | Power Consumption Information |
| 124B | Power Consumption Information |
| 124C | Power Consumption Information |
| 124D | Power Consumption Information |
| 152 | Generation Unit |
| 152A | Learning Unit |
| 152B | Estimation Unit |
| 154 | Setting Accepting Unit |
| 156 | Specifying Unit |
| 158 | Air Conditioning Control Unit |
| 160 | Correction Unit |
| 200 | Air Conditioning Apparatus |
| 201 | Control Circuit |
| 202 | Communication Interface |
| 203 | Temperature Sensor |
| 204 | Humidity Sensor |
| 220 | Storage Apparatus |
| 222 | Control Program |
| 224 | Setting Value |
| 230 | Indoor Unit |
| 231 | Indoor Fan |
| 232 | Expansion Valve |
| 233 | Heat Exchanger |
| 240 | Outdoor Unit |
| 241 | Outdoor Fan |
| 242 | Compressor |
| 243 | Heat Exchanger |
| 300 | Manufacturing Apparatus |
| 300A | Machine Tool |
| 301 | Control Circuit |
| 302 | ROM |
| 303 | RAM |
| 304 | Communication Interface |
| 305 | Fieldbus Controller |
| 306 | Drive Unit |
| 309 | Internal Bus |
| 320 | Storage Apparatus |
| 322 | Machining Program |
| 324 | Machining Parameters |

**Claims**

1. A controller for controlling an air conditioning apparatus installed in a factory, the factory being equipped with a manufacturing apparatus installed therein for manufacturing a workpiece whose manufacturing quality changes depending on a temperature inside the factory and a humidity inside the factory, the controller comprising:

   a storage apparatus for storing power consumption information indicating a correlation between a target temperature inside the factory, a target humidity inside the factory, and a power consumption of the air conditioning apparatus;

a setting accepting unit for accepting a setting of an allowable range for a combination of a target temperature and a target humidity indicated by the power consumption information;

a specifying unit for specifying from the power consumption information, a combination of a target temperature and a target humidity that minimize the power consumption within the allowable range as setting values for the air conditioning apparatus; and

an air conditioning control unit for controlling the air conditioning apparatus based on the setting values specified by the specifying unit.

2. The controller according to claim 1,

wherein the storage apparatus stores a plurality of pieces of power consumption information,

each of the plurality of pieces of power consumption information is associated with a period in advance, and

the specifying unit acquires a piece of power consumption information corresponding to a current period from among the plurality of pieces of power consumption information and specifies the setting values from the acquired piece of power consumption information.

3. The controller according to claim 1 or 2,

wherein the manufacturing apparatus includes at least one of a machine tool; and a semiconductor manufacturing apparatus.

4. The controller according to any one of claims 1 to 3, further comprising:

a correction unit for correcting, based on the setting values, at least one of a parameter related to manufacturing the workpiece with the manufacturing apparatus; and a machining program related to manufacturing the workpiece with the manufacturing apparatus.

5. The controller according to any one of claims 1 to 4, further comprising:

a generation unit for generating the power consumption information based on a predetermined data set,

wherein the data set includes, for each point in time in the past, the temperature outside the factory at the point in time, the humidity outside the factory at the point in time, an operating state of the manufacturing apparatus at the point in time, the temperature inside the factory at the point in time, the humidity inside the factory at the point in time, and load information regarding the air conditioning apparatus at the point in time, in association with each other,

the temperature inside the factory at the point in time includes at least one of a set temperature of the air conditioning apparatus and an actual temperature measured inside the factory,

the humidity inside the factory at the point in time includes at least one of a set humidity for the air conditioning apparatus and an actual humidity measured inside the factory, and

the load information regarding the air conditioning apparatus at the point in time includes at least one of the power consumption of the air conditioning apparatus and a heat load on the air conditioning apparatus.

6. A control method for controlling an air conditioning apparatus installed in a factory,

the factory being equipped with a manufacturing apparatus installed therein for manufacturing a workpiece whose manufacturing quality changes depending on a temperature inside the factory and a humidity inside the factory, the control method comprising:

a step of acquiring power consumption information indicating a correlation between a target temperature inside the factory, a target humidity inside the factory, and a power consumption of the air conditioning apparatus;

a step of accepting a setting of an allowable range for a combination of a target temperature and a target humidity indicated by the power consumption information;

a step of specifying, from the power consumption information, a combination of a target temperature and a target humidity that minimize the power consumption within the allowable range as setting values for the air conditioning apparatus; and

a step of controlling the air conditioning apparatus based on the setting values specified in the step of specifying.

7. A control program to be executed by a computer for controlling an air conditioning apparatus installed in a factory,

the factory being equipped with a manufacturing apparatus installed therein for manufacturing a workpiece whose manufacturing quality changes depending on a temperature inside the factory and a humidity inside the factory,

the control program enabling the computer to carry out:

a step of acquiring power consumption information indicating a correlation between a target temperature inside the factory, a target humidity inside the factory, and a power consumption of the air conditioning apparatus;

a step of accepting a setting of an allowable range for a combination of a target temperature and a target humidity indicated by the power consumption information;

a step of specifying from the power consumption information, a combination of a target temperature and a target humidity that minimize the power consumption within the allowable range as setting values for the air conditioning apparatus; and

a step of controlling the air conditioning apparatus based on the setting values specified in the step of specifying.

FIG.1

FIG.2

FIG.3

FIG.4

FIG.5

FIG.6

200

AIR CONDITIONING APPARATUS

201
CONTROL
CIRCUIT

202
COMMUNICATION
INTERFACE

203
TEMPERATURE
SENSOR

204
HUMIDITY
SENSOR

220
STORAGE
APPARATUS

CONTROL
PROGRAM — 222

SETTING
VALUES — 224

230
INDOOR UNIT

231 — INDOOR FAN

232 — EXPANSION
VALVE

233 — HEAT
EXCHANGER

REFRIGERANT 240

INDOOR UNIT

241 — OUTDOOR
FAN

242 — COMPRESSOR

243 — HEAT
EXCHANGER

FIG.7

300A(300)

MACHINE TOOL

| 301 | 302 | 303 | 304 |
|---|---|---|---|
| CONTROL CIRCUIT | ROM | RAM | COMMUNICATION INTERFACE |

310

320

STORAGE APPARATUS

MACHINING PROGRAM — 322

MACHINING PARAMETERS — 324

305

FIELDBUS CONTROLLER

306

DRIVE UNIT

FIG.8

FIG.9

123

| TIME | TEMPERATURE OUTSIDE THE FACTORY | HUMIDITY OUTSIDE THE FACTORY | TEMPERATURE INSIDE THE FACTORY | HUMIDITY INSIDE THE FACTORY | AMOUNT OF SOLAR RADIATION | OPERATING STATE | LOAD INFORMATION |
|---|---|---|---|---|---|---|---|
| t1 | $T_{outdoor}(t1)$ | $H_{outdoor}(t1)$ | $T_{target}(t1)$ | $H_{target}(t1)$ | $S(t1)$ | $W_{indoor}(t1)$ | $W_{cooling}(t1)$ |
| t2 | $T_{outdoor}(t2)$ | $H_{outdoor}(t2)$ | $T_{target}(t2)$ | $H_{target}(t2)$ | $S(t2)$ | $W_{indoor}(t2)$ | $W_{cooling}(t2)$ |
| t3 | $T_{outdoor}(t3)$ | $H_{outdoor}(t3)$ | $T_{target}(t3)$ | $H_{target}(t3)$ | $S(t3)$ | $W_{indoor}(t3)$ | $W_{cooling}(t3)$ |
| ⋮ | ⋮ | ⋮ | ⋮ | ⋮ | ⋮ | ⋮ | ⋮ |

FIG.10

INPUT

$T_{outdoor}$ (t1)$\cdots$
$H_{outdoor}$ (t1)$\cdots$
$T_{target}$ (t1)$\cdots$
$H_{target}$ (t1)$\cdots$
$S$(t1)$\cdots$

MD(MD1)

X H Y

$x_1 \rightarrow h_1 \rightarrow y_1$

ESTIMATION RESULTS

$W'_{cooling}$ (t1)$\cdots$

COMPARISION

$W_{cooling}$ (t1)$\cdots$

CORRECT VALUES

INPUT

$T_{outdoor}$ (t2)$\cdots$
$H_{outdoor}$ (t2)$\cdots$
$T_{target}$ (t2)$\cdots$
$H_{target}$ (t2)$\cdots$
$S$(t2)$\cdots$

MD(MD2)

X H Y

$x_2 \rightarrow h_2 \rightarrow y_2$

ESTIMATION RESULTS

$W'_{cooling}$ (t2)$\cdots$

COMPARISION

$W_{cooling}$ (t2)$\cdots$

CORRECT VALUES

FIG.11

INPUT

$W_{indoor}(t) \cdots$

$T_{outdoor}(t) \cdots$

$H_{outdoor}(t) \cdots$

$T_{target}(t) \cdots$

$H_{target}(t) \cdots$

$S(t) \cdots$

TRAINED MODEL

MD

ESTIMATION RESULTS

DURING OPERATION OF MACHINE TOOL

$W_{cooling}$[kW]

TIME

124

Humidity [%rh]

Temperature [°C]

[kW] W    P

P

FIG.12

MAXIMUM POWER CONSUMPTION (MAY)

FIG.13

AVERAGE POWER CONSUMPTION (MAY)

FIG.14

MAXIMUM POWER CONSUMPTION (AUGUST)

FIG.15

AVERAGE POWER CONSUMPTION (AUGUST)

FIG.16

EP 4 421 397 A1

FIG.17

START
(ALLOWABLE RANGE
SETTING PROCESSING)

S110
ALLOWABLE RANGE
SETTING COMMAND ACCEPTED?

NO

YES

S112
DISPLAY SETTING SCREEN

S120
SAVE OPERATION ACCEPTED?

NO

YES

S122
SAVE ALLOWABLE RANGE

END
(ALLOWABLE RANGE
SETTING PROCESSING)

31

FIG.18

```
                    ┌─────────────────────────┐
                    │          START          │
                    │      (SETTING VALUE      │
                    │    CHANGE PROCESSING)    │
                    └────────────┬────────────┘
                                 │
         ┌──────────────────────→│
         │                       ▼                     ╭─ S150
         │            ╱───────────────────────╲
         │          ╱   COMMAND TO CHANGE       ╲
         │        ╱        SETTING VALUES         ╲
         └───────╲  FOR AIR CONDITIONING APPARATUS ╱
          NO       ╲         ACCEPTED?           ╱
                     ╲───────────┬─────────────╱
                              YES │
                                  ▼                     ╭─ S152
                    ┌─────────────────────────────────┐
                    │ ACQUIRE POWER CONSUMPTION        │
                    │ INFORAMTION CORRESPONDING        │
                    │ TO CURRENT PERIOD                │
                    └────────────┬────────────────────┘
                                 ▼                     ╭─ S154
                    ┌─────────────────────────────────┐
                    │     ACQUIRE SETTING VALUES       │
                    │ THAT MINIMIZE POWER CONSUMPTION  │
                    │      WITHIN ALLOWABLE RANGE      │
                    └────────────┬────────────────────┘
                                 ▼                     ╭─ S156
                    ┌─────────────────────────────────┐
                    │     TRANSMIT SETTING VALUES      │
                    │   TO AIR CONDITIONING APPARATUS  │
                    └────────────┬────────────────────┘
                                 ▼                     ╭─ S158
                    ┌─────────────────────────────────┐
                    │    CALCULATE CORRECTION AMOUNT   │
                    │      FOR MACHINING PARAMETERS    │
                    │ BASED ON SETTING VALUES AFTER    │
                    │              CHANGE              │
                    └────────────┬────────────────────┘
                                 ▼                     ╭─ S160
                    ┌─────────────────────────────────┐
                    │    CALCULATE CORRECTION AMOUNT   │
                    │      FOR MACHINING PARAMETERS    │
                    │ BASED ON SETTING VALUES AFTER    │
                    │              CHANGE              │
                    └────────────┬────────────────────┘
                                 ▼
                    ┌─────────────────────────┐
                    │           END           │
                    │      (SETTING VALUE      │
                    │    CHANGE PROCESSING)    │
                    └─────────────────────────┘
```

FIG.19

Input ─── Outdoor (Weather) ─── Output ───

Indoor    $W_{indoor}$ ○

Target    $T_{target}/H_{target}$ ○

          $T_{outdoor}/H_{outdoor}$ ○ ── RNN model ── MD

Outdoor
(Weather) Sunshine ○

Thermal load of cooling unit
○ $W_{cooling}(t)$

○ $P_{cooling}(t)$
Power consumption of
cooling unit

Input layer
(3 × 7)

Internal layer
(32 × 1)

Ourput layer
(1 × 1)

Temperature difference

$\Delta T(t-6)$ ・・・ $\Delta T(t)$

Specific-enthalpy difference

$\Delta U(t-6)$ ・・・ $\Delta U(t)$

Sunshine

$\Delta T(t-6)$ ・・・ $\Delta T(t)$

LSTM block

LSTM block

⋮

LSTM block

Thermal load
by outdoor
conditions

○

FIG.20

C1, C2 : CAPACITOR UNIT
E1, E2 : HEAT EXCHANGER OF AIR CONDITIONING APPARATUS 200
S : SWITCH

FIG.21

FIG.22

FIG.23

FIG.24

FIG.25

FIG.26

FIG.27

## INTERNATIONAL SEARCH REPORT

| International application No. |
| --- |
| **PCT/JP2022/041003** |

**A.    CLASSIFICATION OF SUBJECT MATTER**

*F24F 11/46*(2018.01)i; *B23Q 11/14*(2006.01)i; *F24F 11/64*(2018.01)i; *G05B 23/02*(2006.01)i
FI:    F24F11/46; F24F11/64; B23Q11/14; G05B23/02 Z

According to International Patent Classification (IPC) or to both national classification and IPC

**B.    FIELDS SEARCHED**

Minimum documentation searched (classification system followed by classification symbols)

F24F11/46; B23Q11/14; F24F11/64; G05B23/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| Y | WO 2016/121107 A1 (MITSUBISHI ELECTRIC CORP) 04 August 2016 (2016-08-04) paragraphs [0009]-[0081], fig. 1-18 | 1-7 |
| Y | JP 2013-228922 A (JTEKT CORP) 07 November 2013 (2013-11-07) paragraph [0023] | 1-7 |
| Y | JP 2011-247514 A (MITSUBISHI ELECTRIC CORP) 08 December 2011 (2011-12-08) paragraphs [0012]-[0062], fig. 1-8 | 1-7 |
| Y | JP 2017-142595 A (FANUC LTD) 17 August 2017 (2017-08-17) paragraphs [0016]-[0091], fig. 1-8 | 4-5 |
| A | WO 2021/192279 A1 (MITSUBISHI ELECTRIC CORP) 30 September 2021 (2021-09-30) entire text, all drawings | 1-7 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **11 January 2023** | **24 January 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/041003**

| Patent document cited in search report | | | Publication date (day/month/year) | Patent family member(s) | | | Publication date (day/month/year) |
|---|---|---|---|---|---|---|---|
| WO | 2016/121107 | A1 | 04 August 2016 | CN | 107110545 | A | |
| | | | | paragraphs [0033]-[0128], fig. 1-18 | | | |
| | | | | TW | 201627614 | A | |
| JP | 2013-228922 | A | 07 November 2013 | CN | 103376793 | A | |
| | | | | paragraph [0037] | | | |
| JP | 2011-247514 | A | 08 December 2011 | (Family: none) | | | |
| JP | 2017-142595 | A | 17 August 2017 | US | 2017/0227950 | A1 | |
| | | | | paragraphs [0025]-[0155], fig. 1-8 | | | |
| | | | | DE | 102017000955 | A1 | |
| | | | | CN | 107045330 | A | |
| WO | 2021/192279 | A1 | 30 September 2021 | CN | 115280075 | A | |
| | | | | entire text, all drawings | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020144470 A